Europäisches Patentamt

European Patent Office

Office européen des brevets

(11) Publication number: **0 230 721**
**A2**

(12) **EUROPEAN PATENT APPLICATION**

(21) Application number: **86308676.5**

(51) Int. Cl.⁴: **G06F 9/44**

(22) Date of filing: **06.11.86**

(30) Priority: **22.01.86 US 821332**

(43) Date of publication of application:
**05.08.87 Bulletin 87/32**

(84) Designated Contracting States:
**DE FR GB**

(71) Applicant: **MTS SYSTEMS CORPORATION**
**14000 Technology Drive**
**Eden Prairie, MN 55344(US)**

(72) Inventor: **Tillman, David M.**
**6010 Game Farm Road**
**Mound Minnesota 55360(US)**
Inventor: **Sparks, Hugh V.**
**14295 Valley View Road**
**Eden Prairie Minnesota 55344(US)**

(74) Representative: **Bayliss, Geoffrey Cyril et al**
**BOULT, WADE & TENNANT 27 Furnival Street**
**London EC4A 1PQ(GB)**

(54) **Multiprocessor control system.**

(57) A digital system has multiple processors (22A-22N) connected to a common bus (24) and to a shared global memory (32). The global memory stores a data flow program as a set of data structures which define objects - (which are processing units) and connections between those objects. Each object typically has terminals through which input data is received and/or through which output data is provided, and a method associated with one or more terminals for manipulating the data. Each method has an assigned processor and an assigned priority. The data flow program is executed by the processors (22A-22N) with the aid of a scheduler which schedules the methods to be performed by a particular processor based upon the priorities of those methods and the time at which input data is present at the entry terminals associated with those methods.

Fig.3

## MULTIPROCESSOR CONTROL SYSTEM

### BACKGROUND OF THE INVENTION

I. Field of the Invention.

The present invention relates to digital systems. In particular, the invention relates to a multiprocessor digital computer system which executes data flow programs by executing the program in the form of individual methods which have a preassigned processor and priority.

2. Description of the Prior Art.

Conventional computer langauges such as FORTRAN, Basic and Pascal are based on linguistic models of thought. The program is understood by the computer just as a sequence of orders might be understood by a human being. With conventional languages, programs consist of sequences of sentences that are to be "read" by the computer as instructions or commands.

In conventional programming languages, groups of instructions (or statements) may be grouped together as procedures that can be called to operate as a unit. These groups of sentences accomplish a single conceptual operation in the problem domain of the program, just as a paragraph of text develops a particular idea in a document. A procedure may call on other procedures to help solve a problem. In conventional top-down programming, problems can be solved by functional decomposition, the problem is broken down into a hierarchy of procedures. Each procedure calls other lower level procedures until the subprocedures needed are simple enough to express as a few statements in the programming language.

Programs in conventional procedural languages are normally deterministic. This means that each step is followed by a definite successor in the order that the program was written. One can tell exactly what the computer will do next at any given point in the solution of the problem. In summary, conventional computer languages like FORTRAN, Basic and Pascal are sequential, procedural and deterministic.

These very features of conventional computer languages can make the development of programs for certain types of applications time-consuming and difficult. An example is in the development of control systems, which inherently involve parallel rather than serial operation. The software development for these types of systems is often time-consuming, nonintuitive, prone to errors, very problem specific, and as a result very expensive. In addition, the sequential nature of conventional languages can create difficulties in achieving processing speeds necessary for real-time control functions.

### SUMMARY OF THE INVENTION

The present invention is a multiprocessor digital system which operates based upon a stored data flow program. The system provides extremely high speed execution of the program to achieve an essentialiy parallel rather than serial operation.

The computer system includes a plurality of digital data processors which access a shared memory. The shared memory stores the data flow program as a set of data structures defining a plurality of objects and connections between data flow terminals of those objects. The objects also have methods associated with zero or more of the data flow terminals for manipulating data. Associated with each method is an assigned priority and an assigned processor on which the method is to run.

Associated with each processor of the system is a scheduler for scheduling execution of methods assigned to that processor. This scheduling is performed as a function of the assigned priorities associated with the methods.

A method becomes runnable whenever input data is present at all of the input terminals associated with that method. At that point, the scheduler means schedules the method to be executed by the processor, based upon its assigned priority. Higher priority methods are executed prior to any lower priority methods, and preferably a higher priority method will interrupt the execution of a lower priority method which happens to be in the process of execution.

Using the present invention, extremely efficient allocation of the operations of the multiple digital data processors is achieved. As a result, extremely high speed execution of the overall data flow program is possible.

## BRIEF DESCRIPTION OF THE DRAWINGS

Figure I is a block diagram of a digital control system for creating, on an interactive basis, multilevel hierarchical data flow programs and for executing those programs in a digital control system.

Figure 2 is a block diagram illustrating the functonal structure of the data flow program creation and execution.

Figure 3 is a block diagram of the multiprocessor unit (MPU) of the system of Figure I.

Figures 4A and 4B illustrate displays of a typical composite object and a typical primary object, respecitvely, as used in the system of the present invention.

Figures 5A-5E are displays of composite objects of virtual machine developed using the present invention.

Figure 6 is a diagram illustrating operation of the object manager in the creation of a composite object.

## DETAILED DESCRIPTION OF THE PREFERRED EMBODIMENTS

### I. System Overview.

Figure I shows a digital control system I0 which is used to both develop and execute programs which control digital processes and devices. System I0 includes a host computer I2 which interacts with an operator (e.g. a programmer), by receiving command and input data from keyboard I4 and by displaying information through display I6. Development of a multilevel data flow program takes place at host computer I2.

Host computer I2 communicates with multiprocessor unit (MPU) I8, which executes the programs developed within host computer I2. MPU I8, which preferably includes a plurality of digital processing units - (such as microcomputers) sharing a common bus and a global memory, interacts with the control environment through transducers 20. Depending upon the particular requirements of control system I0, transducers 20 can, for example, include sensors, valves, actuators, motors, transmitters, receivers and other devices which interact with the physical environment. Transducers 20 also typically include digital-to-analog and analog-to-digital converter circuitry, so that all communication between transducers 20 and MPU I8 is based upon digital signals (data) which are either sent from MPU I8 to transducers 20 or are sent from transducers 20 to MPU I8.

The development of the data flow programs which are then executed by MPU I8 to operate control system I0 involves a visual metaphor rather than a linguistic metaphor. Host computer I2 interacts with the user by displaying on command each of the levels of the multilevel data flow program on display I6. The program is displayed on display I6 (which is typically a CRT monitor) in the form of a network diagram in which the various objects are interconnected. Through keyboard I4, the operator selects the objects which appear on display I6 and draws the connections between the objects. Host computer I2 stores the information relating to each object and each layer of the multilevel system. This information is also converted by a host computer to a planar (single level) representation of primary objects and their connections, and is then transferred to MPU I8 where it is stored in the form of a set of data structures. When MPU I8 and transducers 20 are put into operation, MPU I8 executes the program based upon this stored set of data structures and data received from transducers 20.

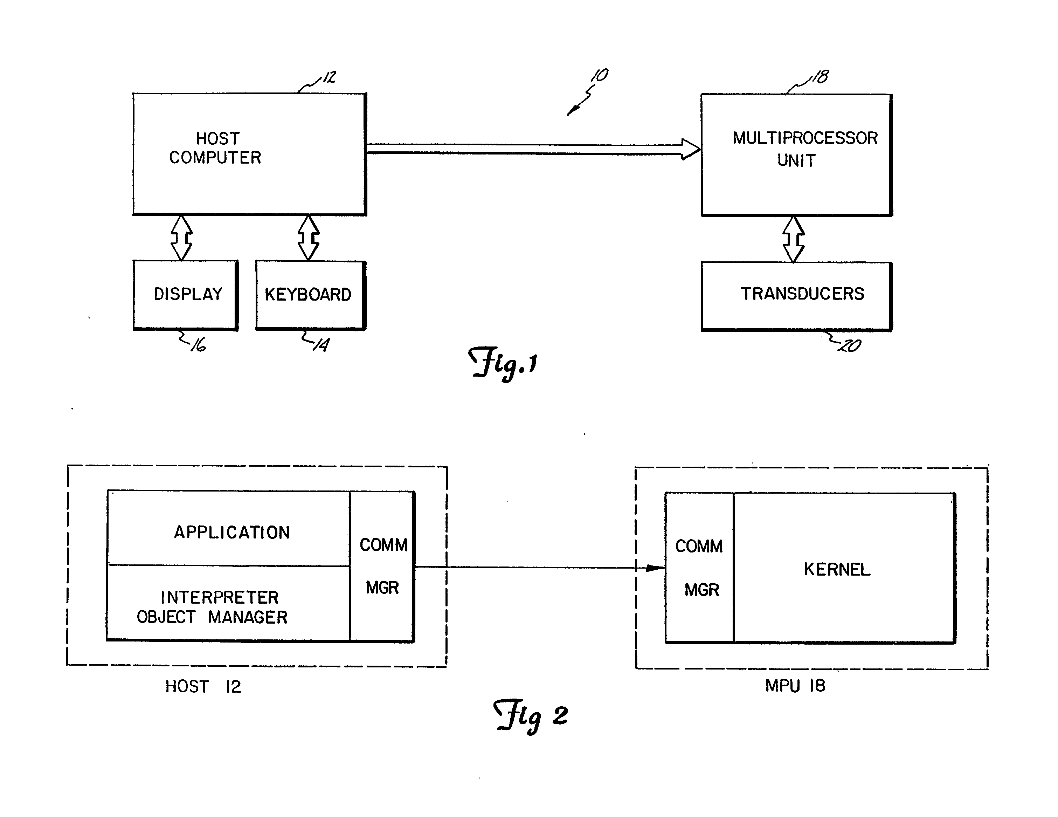

Figure 2 is a diagram of the functional structure of the system which is involved in the creation and execution of data flow programs. Within host I2, there are three major functional subsystems: the application, the interpreter and object manager, and the communication manager. Within MPU I8, there are two major function subsystems; the communication manager and the kernel.

The application subsystem is a traditional program written specifically to monitor and control the operation of a specific system application. The application program is written and executed on host computer I2 and interfaces with the user (through keyboard I4 and display I6).

The interpreter receives user commands to create objects and data flow connections between objects. The interpreter supports the graphical display l6 that automatically documents and displays the action of the interpreter commands. Appropriate legal commands from the user are passed on by the intepreter to the object manager.

The object manager maintains the hierarchical definition of objects and maintains the data necessary for the graphical display. It is the object manager which converts the composite objects to a functionally equivalent single level descripton of primary objects and their connections.

The communication managers provide the communication between the object manager and the kernel. It is through the communication managers that the description of primary objects and their connections is transferred from the object manager to the kernel.

One of the processors of MPU l8 has stored an executive subsystem used to create data structures in global memory 32 for the primary objects and connections which form the single level representation of the data flow program. This processor also has the code that manages the communication link (i.e. the communication manager). The processors of MPU l8 contain a scheduler system and related components which allocates tasks among the various processors of MPU l8. This achieves a much faster and more parallel processing of data in accordance with the data flow program stored in the kernel. The term "kernel" denotes all of the processors of MPU l8 taken together with the communication manager and the module that builds the kernel data structures --i.e., all of the software within MPU l8.

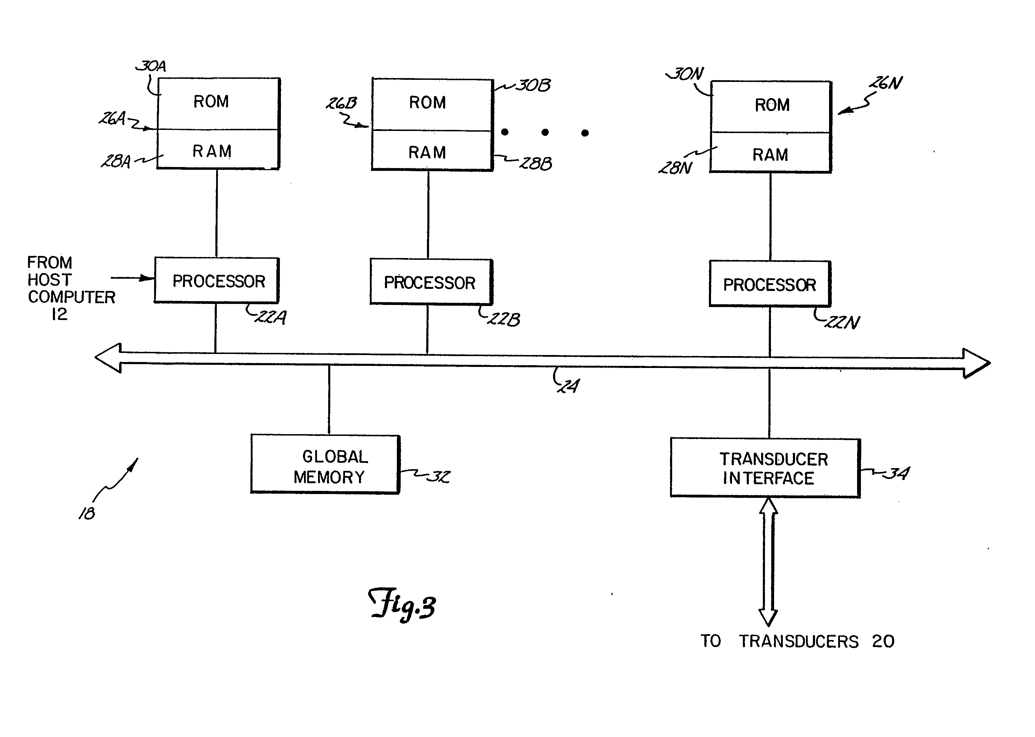

Figure 3 is a block diagram of MPU l8. In this embodiment, a total of N processors 22A-22N are connected to a common bus 24. Each processor 22A-22N has a local memory 26A-26N which includes both RAM storage 28A-28N and ROM storage 30A-30N, respectively. In addition, all of the processors 22A-22N access a common global memory 32. It is through this shared or global memory 32 that the processors 22A-22N communicate and share data with one another.

Also connected to bus 24 is interface circuitry 34. Data to and from transducers 20 is communicated through interface circuitry 34 to bus 24, and thereafter to processors 22A-22N and global memory 32.

In the embodiment shown in Figure 3, communication between host computer l2 and MpU l8 is achieved through one of the processors 22A which also acts as a communications controller. The information from the object manager is supplied first to processor 22A, which then in turn places the necessary information into global memory 32 for use by all of the processors 22A-22N.

A copy of the scheduler is stored in each of the local memories 26A-26N. The data structures which describe the single layer data flow diagram are stored in global memory 32.

As will be described in further detail later in this specification, the scheduler greatly enhances processing speed by the use of a single stack interrupt scheme in which higher priority tasks execute to completion on a specified processor from among processors 22A-22N. In other words, each primary object method has both a specified priority and a specified processor which is to execute that method. When data is present at all of the entry terminals on a method. The method is scheduled to execute on the specified processor according to its specified priority.

## 2. Creation of Multilevel Data Flow Programs

### a. Composite and Primary Objects

In the present invention, data of the data flow program flows between processing units which are called "objects". An object is an entity that accepts data, processes it, and sends the data on. These objects are the basic processing units of the system, and are used to organize processing into conceptual parts. The system is specified by description of a network of objects and their interconnections. The data flow program is written, therefore, by creating particular objects and specifying the connections between those objects. During operation, digital signal streams flow concurrently between objects.

Each object typically has at least one terminal. An "entry" terminal is one through which data enters and a "result" terminal is one through which data leaves the object. The object can have entry terminals, result terminals, or both, or none.

All objects and terminals have names by which they are identified. Every object also has an associated "object type". An object type is a description or template for the creation of objects. An object type can be created by associating it with a file already containing the information, or the file can be created by using an existing object as a template. Objects created from the same object type will be identical. An object can be modified once it has been created but, of course, once modified that object no longer matches the original object type specification.

4

In the present invention, objects are divided into two classes: composite objects and primary objects.

A composite object has an internal network of other objects. The member objects of a composite object can either be other composite objects or can be primary objects, or a combination of the two.

A primary object is the lowest level object within a system. A primary object does not have an internal network of objects and connections. The primary objects are predefined building blocks which are used by the programmer in creating a more complex data flow program.

## (I) Composite Objects

Parts of a composite object include the internal member objects, the terminals of the composite object, and the connections between them. The member objects themselves can be composite objects or primary objects. A composite object is actually a hierarchical tree of objects; where the interior nodes are composite objects, and the leaf nodes are primary objects. The primary objects are the objects that actually perform operations on data (they are the building blocks which are actually used by MPU I8 in the execution of the data flow program). Connections between (and within) composite objects actually define "circuits" between primary objects.

In fact, the entire system consists of one composite object definition. The SYSTEM object is a predefined object and contains all objects that the user creates during the program creation process. Thus every object (with the exception of SYSTEM) is a part of a higher level composite object. A higher level composite object is called the object's "parent".

An object type definition for a composite object specifies the object's members, terminals, connections, and the specific parameters for those parts. It does not specify the implementation of any of the parts. If the composite object contains an object of another type at a lower level, that object type is looked up and identified. Thus a composite object contains a hierarchy of objects, but an object type definition for that composite object defines only one level.

## (2) Primary Objects

Primary objects perform the actual manipulation of data in the system of the present invention. This data manipulation is performed by procedures which are called "methods". A method is a procedure that typically accepts data from an entry terminal or terminals, processes that data, and may send the data out through one or more result terminals. The data flows over connections to another primary object containing another method. Thus methods are executable entities that perform data manipulations within the SYSTEM.

Composite object types are completely described by a type description file. Primary object types also have a description file, but the implementaton of their function is contained in a "primary module" written in a primary language. This primary module is predefined and built into the system. To create a new primary object type, the programmer must write and compile a module that describes the behavior of all of the methods in the primary object. The primary object module must be linked with all other primaries to form a new kernel image. The new image is then installed in the MPU system using the communication link.

A primary module includes zero or more methods, instance variables, procedures and functions, an initilization routine, and a termination routine.

Instance variables define information for the use of the primary object type. Each object created using this primary object type will get its own copy of these instance variables. The variables exist for the life of the primary object and are visible to all routines within the primary module.

The procedures and functions are, in one embodiment, normal Pascal procedures and functions. The initialization routine is executed when an instance of the primary object type is created. The initilization routine is used to initialize the instance variables and allocate any user-defined data structures.

Similarly, the termination routine is executed when a primary object is destroyed. It can be used to deallocate any user defined data structures, or turn off any hardware devices that the primary object controls. In many cases, no initialization or termination routine is necessary.

### b. Display Characteristics of Objects

Host computer 12 displays a model of the user's hierarchical data flow on display 16 for inspection and editing. To do this, each object within the model must possess display oriented information used to drive display 16. This information has no effect on the operation of the data flow model, it is simply to aid in documenting it and allowing intuitive user interaction in the creation and modification process.

Like electical circuits that have standard symbols for components like resistors and capacitors, every object in the present invention has an "icon". An icon is a graphical representation of an object on display 16. Object types include an icon representing that type. Objects created from that object type inherit this icon. Whenever the object is displayed, the icon is displayed along with the object name.

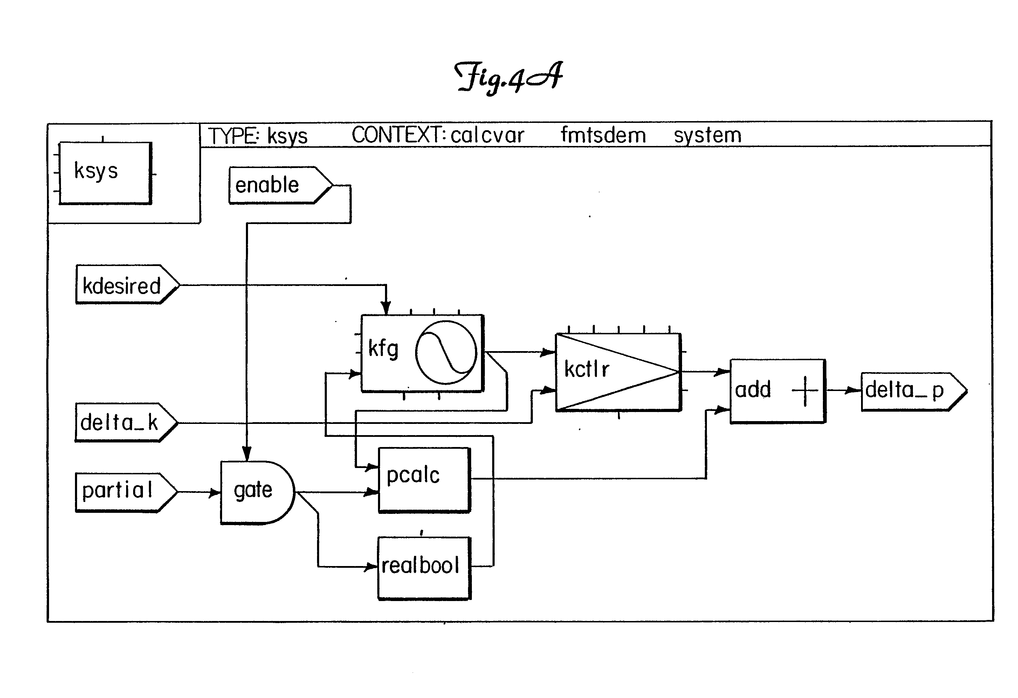

Figure 4A is a display of a composite object named "ksys" which shows the icons and connections of that object's member objects. In the upper lefthand corner is shown the icon of the parent object ksys.

The terminals of an object are represented by stubs on the icon. When connections are made to terminals, the connection is displayed as a line from the stub of the source terminal to the stub of the destination terminal. The connections can have a path associated with them to determine the route the connection will take on the screen of display 16 to get from the source to the destination.

This display information is stored in object type description files in a text form, but the user rarely deals with this form of the representation. Instead, the interpreter provides mechanisms to edit and otherwise manipulate the information in an intuitive (graphical) manner.

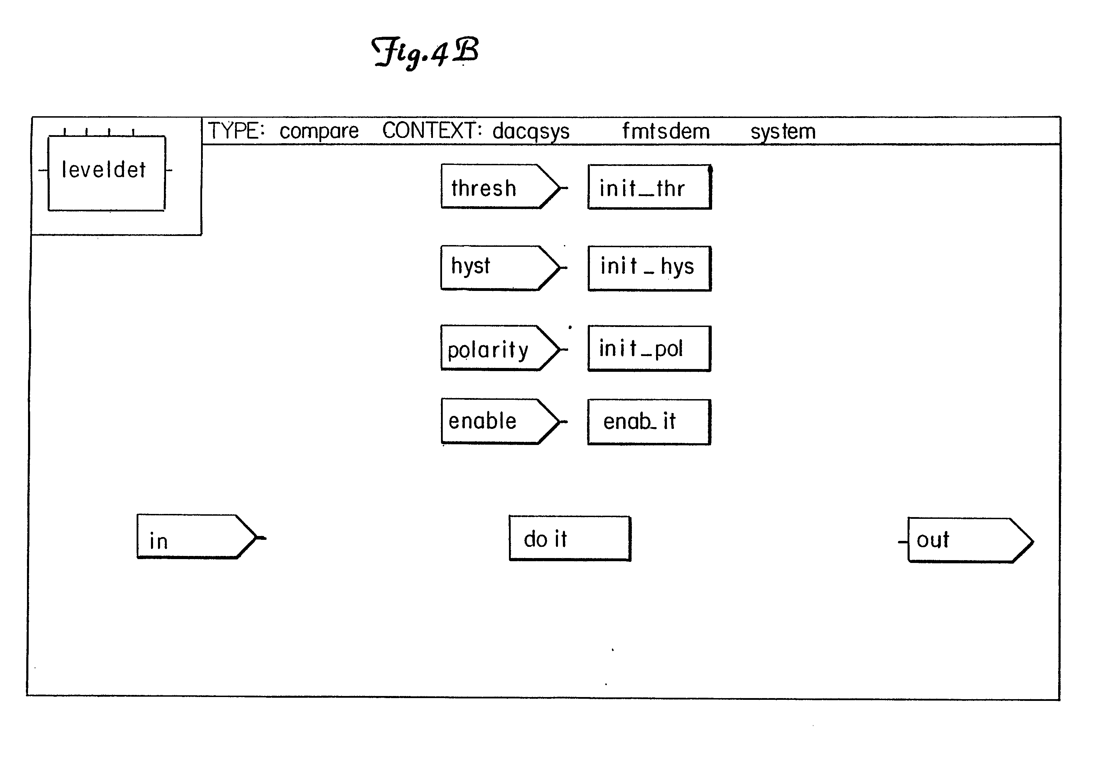

As discussed previously, primary objects do not have an internal network of objects and connections. The internal methods and the terminals are, however, graphically represented. Figure 4B shows a diagram of the internal members of a primary object named "leveldet". The icon of primary object leveldet is shown in the upper lefthand corner of the display.

In this particular example, the primary object leveldet includes six terminals: entry terminals "in", "thresh", "hys", "polarity" and "enable" and result terminal "out". These six terminals are represented by six stubs on the icon shown in the upper lefthand corner of Figure 4B. On the internal primary diagram shown in Figure 4B, the terminals are each represented by arrow-shaped boxes, with box corresponding to one of the stubs on the icon in the upper left corner. The methods used by primary object Leveldet are shown in rectangular symbols and are referred to as "init_thr", "init hys", "init_pol", "enab_it" and "doit".

### c. Use of Composite Objects to Define a Virtual Machine

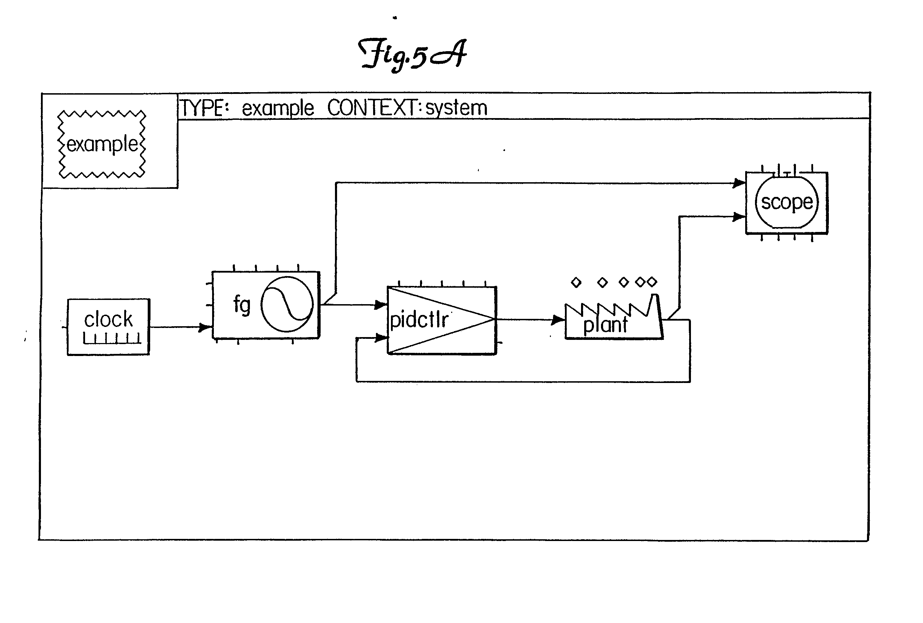

Figures 5A-5E illustrate a set of composite objects which together define a particular "virtual machine". The result is a special purpose digital control system, in the form of a MPU 18 and transducers 20 which are capable of performing a specific predetermined control strategy. The following paragraphs describe a Virtual Machine developed for use as an example.

Figure 5A shows the diagram representing the Virtual Machine defined as "example". At first glance, the diagram looks similar to a block diagram for a typical closed loop control system. A function generator - ("fg") provides command input to a PID controller ("pidctlr") that compares the command to feedback obtained from the plant. The controller generates an error value from the comparison, provides PID conditioning of that value, and outputs it to the plant as a command. Both the function generator output and the plant feedback can be monitored on an oscilloscope.

It is important to realize, however, that the objects included in Figure 5A represent the software created to perform these functions. Each of these objects also contain lower level member objects that subdivide even further until the primary objects of each are reached. Digital data streams replace analoq signals seen in traditional analog systems.

The following paragraphs describe the objects "pidctlr" and "plant", and their member objects.

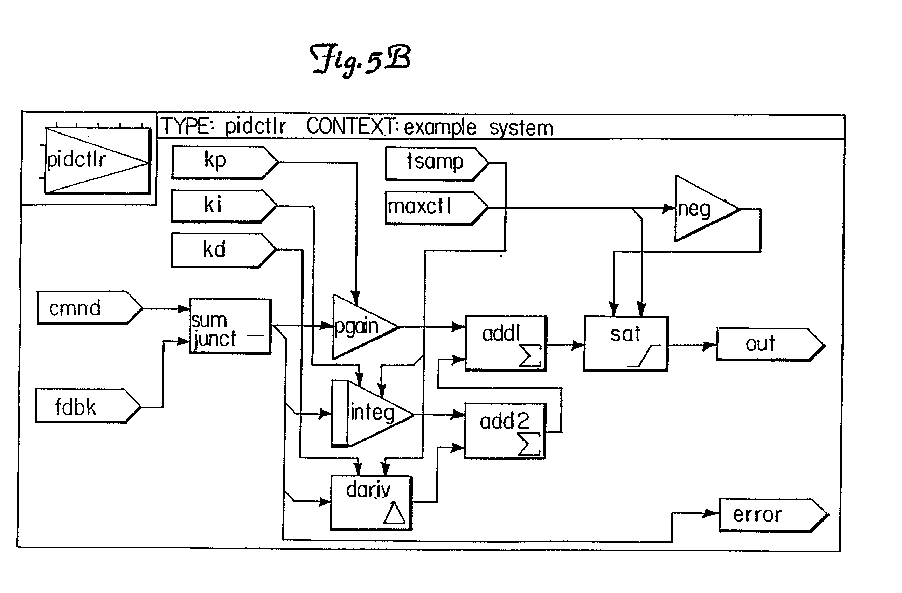

Figure 5B shows the member objects of the PID controller ("pidctlr"). The function of "pidctlr" is to generate an error value resulting from the comparison of the command and feedback inputs; condition the error value according to specified proportional gain, integral and derivative values; and output the resultant value as a command to the plant.

Object "sumjunct" subtracts plant feedback ("fdbk") from the function generator command ("cmnd") to form an error value ("error"). The output value of "sumjunct" is applied to objects that perform proportional gain ("pgain"), and integral ("integ"), and derivative ("deriv") calculations to optimize plant response. These calculations are performed according to application-dependent input parameters ("kp", "ki", and "kd"). The values resulting from these calculations are summed (by objects "addl" and "add2") and applied to the "pidctlr" output via a saturation object ("sat").

The object "sat" is used to limit the output of "pidctlr" to a certain range. A maximum value ("maxctl") is provided to establish the upper limit of the output. This value is also inverted by the object "neg" to establish the lower limit. A limit must be put on the output range due to the rollover factor of digital values: if a value is output by "pidctlr" that is beyond the capability of the receiving device (for example, applying a l3-bit value to a l2-bit digital-to-analog converter), the meaning of the value to the device could be erroneous, if not entirely opposite to that intended.

The following paragraphs take a deeper look at "pidctlr" member objects "integ" and "deriv" and their member objects.

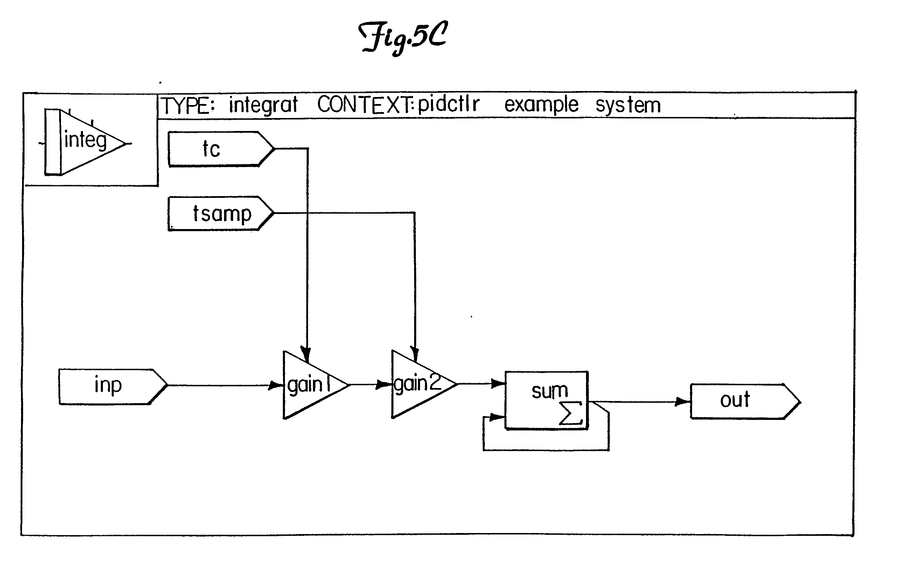

As shown in Figure 5C, the member objects of "integ" include two amplifier objects ("gainl" and "gain2") and a summing object ("sum"). The actual integration of the input is performed by "sum". This object sums the current error value with the sum of the previous error values and presents the sum at the "integ" output. It then retains the new value for summing with the next error value.

Prior to application to "sum", the current error value is scaled by amplifier objects "gainl" and "gain2". The scale factor applied by "gain2", set by entry "tsamp", eliminates variations in integration rate due to sampling rate. The scale factor applied by "gainl", set by entry "tc" controls the integration rate (time constant) of the integrator.

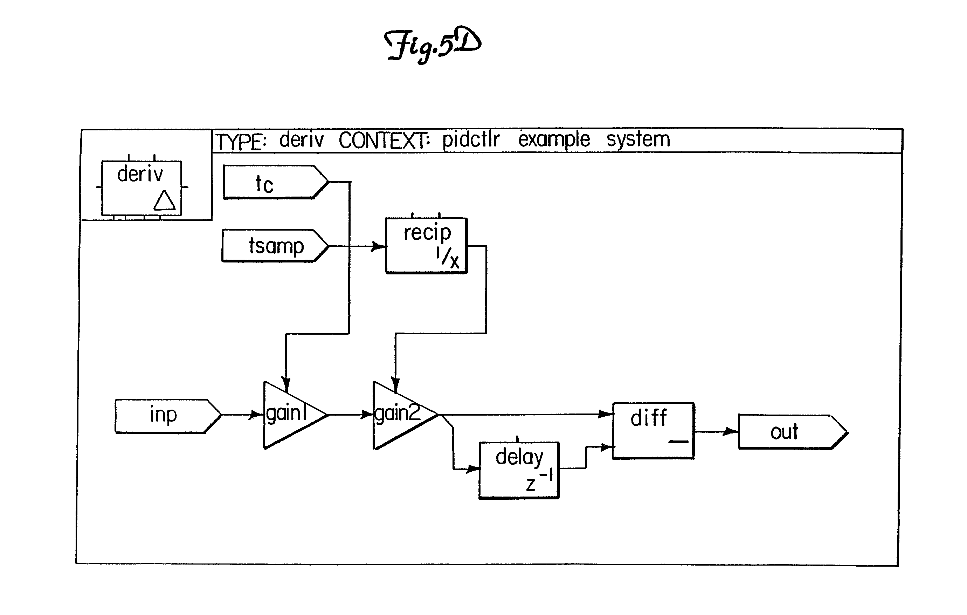

The "deriv" object (shown in Figure 5D) is similar to "integ", but calculates the derivative of the error samples obtained from "sumjunct". The derivative is calculated by comparing each error sample to the previous sample and outputting the difference.

The difference between an error sample and the previous error sample is calculated by the object "diff". The object "delay" receives the same sample as "diff", but delays it for one sample period. Thus, when a current error sample is applied to one input of "diff", the previous error sample is applied to the other input. "Diff" compares the current sample to the previous sample and outputs the difference.

As in object "integ", the error value is scaled to remove sampling rate effects. Object "gain2" scales the error value by the reciprocal of the sampling rate. Object "recip" forms the reciprocal of entry "tsamp" and sends the result to the gain entry of "gain2". The scale factor applied by "gainl", set by entry "tc" controls the differentiation rate (time constant) of the differentiator.

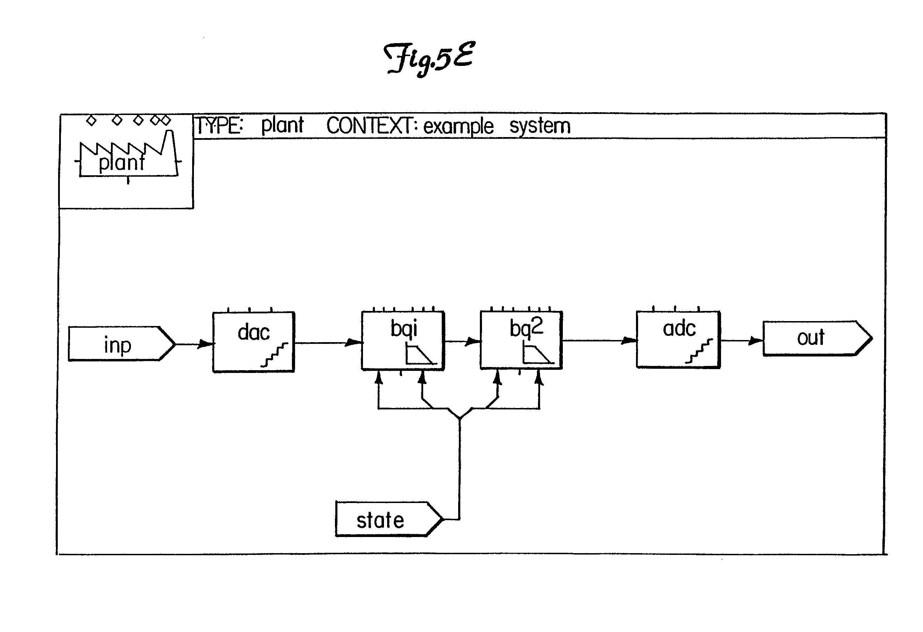

The plant included in "example" is an executable plant model. An executable plant model is software that simulates the input/output characteristics of a real plant and, from the controller's point of view, is similar to a real plant. An executable model can, therefore, be substituted for a real plant for diagnostic purposes such as testing the performance of a control algorithm. Figure 5E shows the objects contained in "plant".

The simulated plant response is performed by biquad objects "bql" and "bq2". The biquad objects are second order digital filters. In their use in "plant", they are cascaded to effect a fourth order digital filter. The characteristics of the filter are established by calculatd constants that, when subjected to values found in a physical plant environment, respond the same as the actual plant would.

Objects "dac" and "adc" simulate the distortions encountered in a physical environment due to the conversion limitations (number of bits) of A/D and D/A converters in the actual system.


### d. User Commands

In creating a data flow program like the one illustrated in Figures 5A-5E, the user makes use of various commands which are interpreted by host computer l2. These commands are provided to manipulate objects and data flow connections between objects.

The object most recently "opened" (i.e. displayed on display l6 so that its internal members are shown) is referred to as the "context object". It is possible to generate a hierarchy of opened objects because of the structure of the programs developed using the present invention. When an object is closed, the parent of that newly closed object becomes the context object.

(I) The Interpreter Command Language

The command language allows the user to create and edit data flow diagrams. Most of the commands have a very uniform syntax. Each command consists of a verb followed by parameters that specify the structures to be manipulated by the command. There are four basic command verbs that apply to six system structures. Each instance of a system structure has a name specified by the user when the structure is created. Other commands use this name as a parameter.

(2) The Four Basic Command Verbs Create -Create a new instance of a structure
Destroy -Destroy a structure
Change -Change attributes of a structure
Show -Display attributes of a structure

(3) The Six System StructuresObjects -Composite or primary data flow objects
Terminals -Entry or result terminals to an object
Methods -Computation primatives of a primary object
Types -Templates that describe how to create an object
Processors -A context for parallel processing
Kernels -A context for executing a data flow program
Objects, terminals and methods have names as well as icons that appear on the display screen. Command verbs may be applied directly to any structure with a named icon by using the form:
VERB <name>
Types, processors and kernels are abstractions. They do not have iconic representations. Command verbs must have qualifiers when applied, to these objects:
VERB/QUALIFIER <name>

(4) Examples

Display the attributes of a processor named "Fred":
SHOW/PROCESSOR Fred
Destroy a primary object named "Zeke":
DESTROY Zeke

(5) Other Interpreter Commands

The following commands have a unique syntax:

(a) Data Flow Connection Commands

Connect -Specify a data flow path between two terminals
Disconnect -Remove a data flow path between two terminals

(b) Context Control

A composite or primary object can be opened, causing the internal structure to be displayed. All the internal structures (other terminals, connections, and objects) become visible and can be manipulated by the command language. When an object is closed, the previous context object becomes the visible context.
Open -Make the specified object the default context
Close -Back up to the previous context

(c) Injecting Data into the Diagram

The user may assign a literal data value to any entry terminal in the current context. This data value will then propagate through the data flow diagram. This operation uses an assignment statement notation:

LET <entry terminal name> : = <literal value>

Literal data values supported include integers, real numbers, boolean values (TRUE or FALSE), character strings and vectors.

(6) The Screen Mode Commands

In addition to the command language, there is an alternative command structure available to the programmer based on a keypad and cursor control keys that work more directly with the image of the data flow diagram. This method of editing the data flow diagram is called the screen mode.

In screen mode the user can select instances of structures that have icons on the context screen without using the structure names. Common command verbs may then be applied to the selected objects using a single keystroke on a function keypad.

(a) Selecting Structures in Screen Mode

Arrow keys on the function keypad cause a graphics cursor to move on the display terminal. The user positions the cursor on top of the icon of a structure and presses a control key called <select>. The <select> operation causes the structure's icon to be highlighted on the screen.

(b) Using Command Verbs in Screen Mode

Only the more common text mode commands are available through the keypad commands. The following keys correspond to text mode commands. Each of these commands works on the structure selected using the <select> key. The icon of the selected structure is highlighted.

SELECT -Select the structure under the cursor.

OPEN -Open the selected primary or composite object

CLOSE -Return to the previous object context

DESTROY -Remove the selected structure from the system

DRAW -Make a data flow connection between two terminals

In addition, certain graphical operations may be performed in screen mode that cannot be done in the text mode. These operations include drawing new icons and moving existing icons on the display screen.

DRAW -The draw key may also modify the shape of an icon or connection.

UNDO -Undo the last operation performed by DRAW

MOVE -Used to move the selected structure on the screen.

e. Primary Modules

As discussed previously, the implementation of a primary object type is contained in a primary module. The primary module is a collection of methods and static data. The methods manipulate the static data, use the primary object entries as parameters, and output computations through the result terminal. A method will execute when data for all of the entry terminals it uses as parameters has arrived.

Table I shows an example of the primary module syntax (Backus-Naur form, BNF). The primary module constructs are decomposed into Pascal constructs.

In this preferred embodiment, primary modules are written in a form of Pascal (for example VMS Pascal). By convention, primary module files are suffixed with ".pri". Table 2 shows an example of a primary module of the primary object "scale.pri".

```
                    KEY to TABLE 1
        :=              "is defined by"
        :               "OR"
        (,)             "any number of interior group"
        [,]             "optional interior group"
                    TABLE 1
primary :=

        primary_heading primary_block 'end' ".";

primary_heading :=

        'primary' primary_name
        ["(" file identifier ( "," file_identifier )
        ")" ] ";";

primary_name := _iden ;

primary_block :=

        ( primary_declaration )
          initialization_part
          termination_part ;

primary_declaration :=
```

```
            include_directive
            :   label_declaration_part
            :   constant_defintion_part
            :   type_definition_part
            :   variable_declaration_part
            :   routine_declaration
            :   method_declaration ;

method_declaration :=

        method_heading method_block ";" ;

method_heading :=

        'method' method_name method_parameter_list ";" ;

method_name := _iden ;

method_parameter_list :=

        "(" method_parameter ( ";" method_parameter )
        ")" ;

method_parameter :=

        entry_declaration : result_declaration ;

entry_declaration :=

        'entry' entry_name ( "," entry_name )
        ":" type_identifier ;

result_declaration :=

        'result' result_name ( "," result_name )
        ":" type_identifier ;

entry_name := _iden ;

result_name := _iden ;

method_block :=

        declaration_part
        method_statements_part ;

method_statements_part :=
```

```
        'begin' statement ( ";" statement ) 'end' ;

unlabeled_statement :=

        structured_statement : goto_statement :
        send_statement : assign_proc_statement :_empty ;

send_statement :=

        'send' _iden ":=" expression ;

initialization_part :=

        ( 'initialize' ";" method_block ";" : _empty ) ;

termination_part :=

        ( 'terminate' ";" method_block ";" : _empty ) ;
```

TABLE 2

```
(*SCALE.PRI : scaler primary object*)

(*Input/output equation : y := (mpr/dvr) * x + ofst*)

primary scale ;

var
        mprx,              (*multiplier constant*)
        dvrx,              (*divider constant*)
        ofstx : real ;     (*offset constant*)

method init_mpr( entry mpr : real ) ;
        begin
        mprx := mpr
end ;


method init_dvr (entry dvr : real ) ;
        begin
        dvrx := dvr
end ;

method initofst( entry ofst : real ) ;
        begin
        ofstx := ofst
end ;
```

```
method doit( entry x : real ; result y : real ) ;
        begin
        send y := ((mprx/dvrx) * x ) + ofstx
    end ;

    initilize ;
        begin (*initialize default values*)
        mprx := 1.0 ;
        dvrx := 1.0 ;
        ofstx := 0.0
    end ;

    end.
```

f. Assignment of Processor/Priority to Methods

Each primary object method has an assigned processor and an assigned priority, which are used by MPU I8 during execution of the data flow program. The assignment of processor and priority to a method generally is made at host computer I2 during creation of the data flow program.

There are three possible sources from which the processor/priority of a method can come. Each mechanism has its own application. The processor and priority specifications for a method tend to be made together, but this is not necessary. The processor specification can come from one source, and the priority specification from another.

The three characteristic assignment mechanisms are (in ascending order of precedence): inherit the information from an outer context; explicit specification in the CREATE/METHOD command; or explicit specification in a OVERRIDE command.

(I) Inherit Specification From An Outer Context.

Every object in the system (i.e. both composite and primary objects) can have a processor and/or a priority characteristic associated with it. Objects themselves do not have any executable code (outside of methods), so they have no direct use for this information. The purpose of this processor/priority information is to provide a default for member methods. If a method does not have an explicit processor or priority specified, it inherits the characteristic from its parent object. If the parent does not have the information, it then comes from the parent's parent, etc. At the top of the tree is the SYSTEM object. SYSTEM is typically defined as being associated with processor "default" and priority "5".

It is possible for no processor/priority to be specified anywhere in the network. In this case every method in the system would run on processor "default" at priority "5".

Any object in the system can have a processor and/or priority specified for it. This will cause all methods which are somewhere within that object to use those characteristics, unless it is overridden at a lower level.

This specification can be assigned when the object is created in the CREATE command, or later interactively changed with the CHANGE command.

The processor/priority characteristics of an object are "external" characteristics. They are not part of the definition of the object. Saving the object itself will not store this information. These characteristics are a part of the definition of the object's parent. If the object's parent is saved, the CREATE command placed into the file will include the processor/priority specification necessary to recreate the object with the characteristics in effect at the time of the save.

(2) Explicit Specification in The METHOD Command

Occasionally, a primary object contains an individual method (or methods) which only makes sense to run at a certain priority. In this case, the specification can be given directly to the method. The method will then use this information regardless of the specifications of the parent object (i.e. the primary object). The specification is made either in the METHOD command, or with the CHANGE command.

The processor/priority characteristics of a method are "internal" to the primary object. The primary object must be opened to modify a method's characeristics. They are part of the definition of the primary type. Saving the primary object will put the appropriate qualifiers on the CREATE/METHOD command placed into the file. This option will reflect the characteristics in effect at the time of the save.

### (3) Explicit Specification in an OVERRIDE Command

The OVERRIDE command is used to override the processor and/or priority specification for a method in a single instance of a primary object type. This is useful when it is required to place individual methods of a primary object onto special processors, where it cannot be part of the generic type. If all the methods of a primary object are to be put onto some specified processor, then the specification can be made on the primary object itself. But if the methods are to be separated, OVERRIDE must be used.

The processor/priority characteristic specified by OVERRIDE is "external" to the primary object. Saving the primary object itself will not store this information. Any explicit characteristics directly on the methods will be saved as described above. OVERRIDE characteristics are a part of the definition of the object's parent. If the object's parent is saved, OVERRIDE commands will be placed into the file to recreate the object with the characteristics in effect at the time of the save.

### g. Effects of Interactively Changing Processors and Priorities

Changing the processor and/or priority of an entity (via CHANGE or OVERRIDE), will immediately change the operating context of all methods logically affected. This will cause methods to subsequently execute in different processors of MPU 18.

The processor characteristic on all entities is a logical processor name. The CREATE/PROCESSOR and CHANGE/PROCESSOR commands can be used to change the mapping of a logical name to a physical processor. This will cause all methods assigned to that logical name to move to the new processor. This allows methods and objects to be assigned to groups independently of their topological relationship. A group can then be moved to a different processor with a single CHANGE/PROCESSOR command.

### h. Conversion of the Multilevel Diagram to a Flat Diagram --The Object Manager

The object manager maintains the data structures necessary to define the objects and the hierarchical data flow diagram which is created. In addition, the object manager is responsible for providing the commands to the kernel which result in the creation of the flat data flow diagram which is maintained by the kernel. Each time the object manager receives a command from the interpreter which involves a change to an existing diagram (whether it is the creation of a new object, a modification of an existing object, a change of connections, etc.), the object manager creates the data structure which is maintained in the host computer 12, and also determines what needs to be done to the flat diagram so that there is a functional equivalent between the flat diagram maintained by the kernel and the multilevel diagram being maintained by the object manager.

In essence, the kernel understands the following commands: create or destroy a primary, connect or disconnect a result terminal to an entry terminal, assign a value to an entry terminal, and manipulate the execution environment of methods (CPU and priority, for example). The kernel deals only with primary objects, and therefore the object manager must provde the necessary commands to convert the multilevel digram which contains composite objects into the flat diagram.

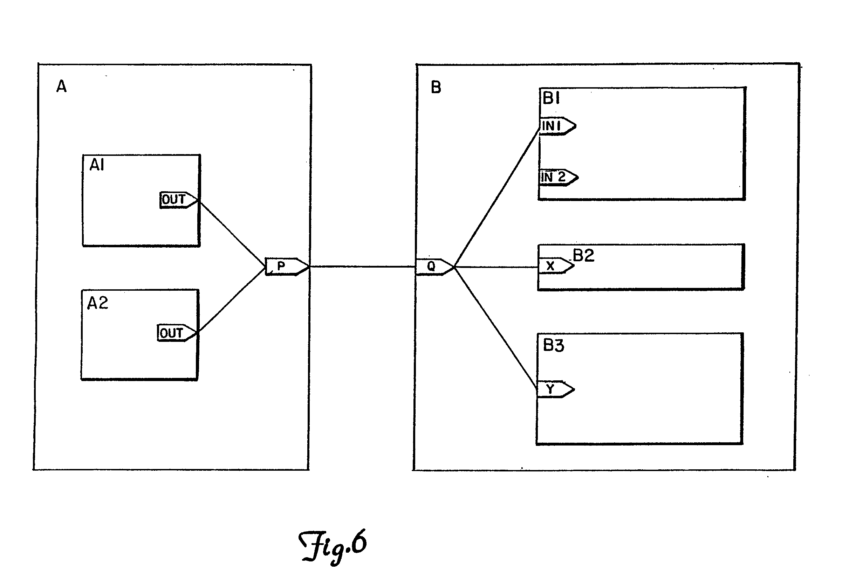

To illustrate in simplified terms the procedure performed by the object manager, reference will be made to a simplified diagram shown in Figure 6. In this diagram, there are two composite objects labelled A and B.

Inside composite object A are two primary objects Al and A2 and a single result terminal P. Objects Al and A2 each have a result terminal named OUT. Within object A, there are connections between primary objects Al and A2 and result terminal P. Composite object B has three primary objects Bl, B2 and B3 and a single entry terminal Q. Bl has two entry terminals INI and IN2, B2 has one entry terminal X, and B3 has one entry terminal Y. Within object B, entry terminal Q is connected to the INI, X and Y entry terminals of primary objects Bl-B3, respectively. There is also a connection between the two objects A and B, which is made from result terminal P to entry terminal Q.

This simplified example will trace the steps performed by the object manager when the user creates object A, creates object B, and connects terminals P and Q together. The first command provided by the user through keyboard I6 will be CREATE A. This causes the object manager to create an empty box with the name "A". The object manager then goes inside the box and creates primary object AI, primary object A2 and result terminal P. It then connects AI.OUT to P and connects A2.OUT to P.

At this point, the object manager communicates with the kernel, and causes the kernel to create primary objects AI and A2. Within the kernel, each primary object is given a unique name. Thus even though two primary objects may be identical, each will have a unique name or "address" within the kernel. As far as the kernel is concerned, composite object A does not exist --only primary objects AI and A2 are known. When this is complete, the object manager goes back outside of the box labelled Object A.

When the CREATE B command is received, the object manager performs a similar procedure by creating an empty box named B, and then going inside that box to create BI, B2, B3 and Q. The connections of results on objects BI-B3 to entry terminal Q are been made by the object manager. Primary objects BI, B2 and B3 are created within the kernel and are given unique names or addresses. When this is complete, the object manager goes back outside object B.

Next, the user provides the command CONNECT A.P to B.Q. This is a command to connect result terminal P of composite object A to entry terminal Q of composite object B. The object manager then creates the data structure with host computer I2 which represents the connection of P to Q.

The object manager goes to result terminal P and checks backwards through all connections and makes a list of the results on primary objects that it finds. Once this is complete, the object manager performs a similar procedure by going to entry terminal Q and looking forward through connections to make a list of all of the entries on primary objects which it finds. This procedure is performed, in a preferred embodiment of the present invention, using a recursive tree transversal procedure. The result is conceptually two logic trees: one tree having result terminal P as the root of the tree, the internal connections as the branches, and results AI.OUT and A2.OUT as the leaves; and the other tree having entry terminal Q as its root, the internal connections as the branches and entries BI.INI, B2.X and B3.Y as the leaves. This example, of course, is very simplified and in more complex systems like the one shown in Figures 5A-5E there are many layers of composite objects and thus much more complex trees.

After the object manager has made the lists of the primary objects, it provides commands to the kernel to make the equivalent connections of the primary objects AI, A2, BI, B2 and B3 as if terminals P and Q and objects A and B did not exist. In this case, the object manager commands the kernel to connect from AI.OUT to BI.INI, from AI.OUT to B2.X, from AI.OUT to B3.Y, from A2.OUT to BI.INI, from A2.OUT to B2.X, and from A2.OUT to B3.Y.

Within the kernel, there is maintained one data structure for each primary object and one data structure for each connection. It is this set of data structures which is maintained in global memory 32 and which is accessed by the various processors 22A-22N. The set of data structures maintained in global memory 32 represent the flat (single level) diagram of the network which is the functional equivalent of the multilevel hierarchical diagram which is concurrently maintained in the form of a set of data structures by the object manager in host computer I2.

## 3. Execution Of The Data Flow Program In MPU I8

Once a data flow program has been created in host computer I2, it can be executed by MPU I8 in a control system environment. MPU I8 interacts with its environment through transducers 20. MPU I8 can operate entirely separate from host computer I2, or can continue to receive control information from host computer I2 to initiate operation, and to change operating parameters or modify the data structures forming the flat diagram even while running.

In order to achieve high speed and effectively parallel operation, MPU I8 uses one or more kernels which are responsible for scheduling the execution of primary object methods within the processors of MPU I8.

Primary object types are defined relative to a kernel or kernels. The code for a primary object type is built into every specific kernel in which it can execute. Instances of a primary object type can only be created within kernels which contain the code for that primary object type.

Primary object methods execute within the processors 22A-22N. Every method has a specific processor and a priority associated with it. When a method is executed, it is done on the assigned processor and at the assigned priority. The kernel is responsible for scheduling execution of the methods.

Kernels have names by which they can be uniquely identified. Processors are also assigned logical names. A processor name is an identifier that is associated with a specific processor in a specific kernel. A method is associated with a specific processor by its logical name. Processor names can be modified to change the physical processor on which the associated methods execute. Methods can be moved between processors within a kernel, but they cannot be moved between kernels.

The scheduler subsystem is the part of the kernel which causes the data flow to occur. In contrast, the executive subsystem of the kernel is responsible for building and maintaining in global memory 32 the data structures representing flat model of the network of primary objects and connections. The scheduler uses those data structures to schedule and execute methods, and propagate data over connections. The - scheduler also handles the interrupts.

The basic entity which gets scheduled is the method. Methods are assigned a processor and a priority. Methods can have one of the following states:

-Idle (not scheduled, not busy)

-runnable (scheduled, not busy)

-executing (not scheduled, busy)

-runnable and executing (scheduled, busy)

When a method is defined, it is idle. When data has arrived at all of its entry terminals, the method becomes runnable. When the approprite processor 22A-22N can execute a method, the method becomes busy. When the method completes execution, it becomes idle again. It is possible for a method to be both runnable and executing. Once a method begins to execute, it is available to be scheduled again. If its entry terminals are once again filled with data, it will be scheduled again.

Executing methods and runnable methods on one processor compete for processor time on a strict priority basis. If a method is executing and a higher priority method becomes runnable, the higher priority method will "interrupt" the lower one, execute to completion, whereupon the lower priority method will continue executing. Thus, there may be many "executing" methods within a processor, but there is always only one "current method". Methods cannot be "suspended" in the classicial multi-tasking sense. They can only be "interrupted" by higher priority tasks.

A method running at a given priority is guaranteed that it will not be asynchronously interrupted by a method of the same or lower priority. If the method explicity calls the scheduler (via SEND or SCHEDULE), any methods of the same priority made runnable by the operation will run to completion before returning to the original method. This exception to the scheduling algorithm is for efficiency purposes. It allows this case to avoid queuing and dequeuing the methods.

Finally, a method is guaranteed that it will not interrupt itself. If the above-mentioned "call through" would normally execute a method, but it is busy, the method is made runnable, instead of executing it.

An identical copy of the scheduler runs in each processor 22A-22N. This initialization is accomplished in two steps. First, SCHED__INITIALIZE is called. This is done by LCL__INITIALIZE as part of initializing the local processor. This will get the scheduler operational in the local processor. When all initialization within the processor is complete, SAVE__IDLE__LOOP is called. As the name suggests, this is the dummy routine which executes when nothing else in the processor is runnable. This routine will never return.

The scheduler is informed of changes in the state of the different scheduling entities by several different procedure calls. These procedures are called by several different parts of the system.

LET__ENTRY is called by the executive to place a value on a specified entry terminal. If the associated method becomes runnable by this action, it is scheduled appropriately.

SEND__RESULT is called from within method routines to "send" a value out a specified result terminal. The value will be propogated through any associated connections, and the destination entry terminals will be updated. This will appropriately schedule any destination methods.

SCHEDULE is called from within the executive or primary objects to cause a method to be scheduled. The specified method should have no entires associated with it. The method will be scheduled according to the normal scheduling rules. The processor from which this procedure is called is unrelated to the processor assigned to the specified method.

METHOD__INTERRUPT is accessed only within the CINT__METHOD logic. This procedure is specified as the "interrupt procedure" for handling user specified interrupts. This procedure will be called within "interrupt context", as opposed to method or execute context.

The procesors 22A-22N have essentially four different execution contexts:

16

(l) Main program level.

This is the state the processor is in when it begins executing the program image. This is indicated in the scheduler as priority 0. This is where main executive routines execute, as well as the slave idle loop.

(2) Method priority I level.

This level is used by the local executive for executing initialization and termination logic, as well as other selected data base manipulation. This level runs at hardware priority level 0.

(3) Other method priority levels (2 and above).

These are the rest of the method execution levels. They are no different than priority I, except that they are guaranteed to interrupt all executive level functions. All user methods should execute at these levels unless there is a reason for executing at priority I. These levels also run at hardware priority level 0.

(4) Interrupt levels.

These levels are hardware interrupt levels. Their implementation is dependent on the type of processor hardware being used. These interrupts transparent to the rest of the system. They even interrupt the - scheduler. The only way to synchronize with an interrupt is by explicit masking out interrupts (or using LOCKS). In general, user code does not execute at interrupt level. The only procedure which can be called at interrupt level is METHOD_INTERRUPT.

An identical copy of the scheduler runs in every processor 22A-22N. Each scheduler has one piece of static data. This static variable (CPU) points to the processor data structure for that local processor.

The scheduler does not really have any data structures of its own. It "owns" pieces of the data structures which the executive subsystem builds. Most of the fields in the executive data structures are initialized and maintained by the executive. The scheduler references a large number of these fields, but does not change them.

There are a few fields in these data structures which are dynamic, and are "owned" by the scheduler. These fields are only manipulated by the scheduler (with the possible exception of initialization).

The PROCESSOR's data structure contains the static and dynamic state of a processor. The dynamic state includes:

CUR_PRIORITY priority of the currently executing method (or zero).

RUN_QUEUE list head for queue of runnable methods. This list is ordered by priority, with first in first out on the same priority.

LOCK resource lock for the above two fields. This is necesary because the scheduler is interruptable, and is running simultaneously on several processors.

The METHODS data structure contains the static and dynamic state of a method. The dynamic state includes:

SCHED_LINK link word for putting the method onto the processor's run queue. Since a method only runs in one processor, this field will only be manipulated while the processor's run queue is manipulated. Thus, access to this field is synchronized by the processor's run queue lock.

VALID This is a bit mask indicating which entry terminals contain "arrived" data. This field is initially zero, and as data arrives at the method entry terminals, the corresponding bits become set. When this field matches the REQUIRE field, data for all the entry terminals have arrived, and the method is to be executed.

LOCK This lock synchronizes the manipulation of the VALID field.

BUSY This flag indicates if the method is executing. It is set when the method begins executing and is cleared when it ends. This prevents recursively executing a method. This field does not require a lock because there are no critical sections of code which must be synchronized.

All of the remaining data in the data base is static information (as far as the scheduler is concerned). The - scheduler subsystem does define one data type:

INT_INFOS. This is a record containing the implementation dependent information required for interprocessor interrupts. This record resides in the processor data base, but it is initialized by the scheduler and is static.

17

Table 3 describes the general scheduling algorithm used by the SEND and SCHEDULE functions to - schedule a method. In the case of SCHEDULE, these conditions are explicity tested. In the case of SEND - (SEND_RESULT procedure), each connection contains a CLASS field which allows some of the decisions to be made with a case statement.

```
                      TABLE 3
         IF method is local THEN
              IF priority is higher THEN
                   IF method is busy THEN
                        insert method into run queue
                   ELSE
                        save priority
                        bump up priority
                        call method
                        restore priority
                        reschedule local processor
                   ENDIF
              ELSEIF priority is same THEN
                   IF method is busy THEN
                        insert method into runqueue
                   ELSE
                        call method
                   ENDIF
              ELSE priority is lower
                   insert method into runqueue
              ENDIF
         ELSEIF method is remote THEN
              insert method into remote runa
              IF priority is higher THEN
                   interrupt remote processor
              ENDIF
         ENDIF
```

## 4. Conclusion

The present invention provides a highly efficient method and system for executing data flow programs. The use of multiple processors which access a shared data base, and the assignment of specific methods to processors ensures an efficient utilization of all of the processors within the system. The assignment of priority to each method ensures that higher priority methods (which may be producing output data needed by other methods within the program) are executed first. The result is a system which is more consistent with the inherently parallel nature of most digital control system requirements.

Although the present invention has been described with reference to preferred embodiments, workers skilled in the art will recognize that changes may be made in form and detail without departing from the spirit and scope of the invention.

## Claims

I. A computer system comprising:
a plurality of digital data processors;
a shared memory accessible concurrently by the processors for storing a data flow program as a set of data structures defining a plurality of objects with terminals and methods associated with the terminals for manipulating data, each method having an assigned priority and an assigned processor; and
a scheduler associated with each processor for scheduling execution of methods assigned to that processor as a function of the assigned priority associated with the method.

2. The invention of claim I wherein the processor executes methods in order of their assigned priorities, with higher priority methods interrupting execution of lower priority methods.

3. The invention of claim 2 wherein the terminals include entry terminals for receiving input data and result terminals for providing output data.

4. The invention of claim 3 wherein each method has an idle state when it is not scheduled by the - scheduler and is not busy, a runnable state when it is scheduled but not busy, an executing state when it is not scheduled but busy, and a runnable and executing state when it is both scheduled and busy; and wherein a method becomes runnable whenever input data has arrived at all entry terminals with which the method is associated.

5. The invention of claim I and further comprising:
a local memory associated with each of the plurality of digital data processors.

6. The invention of claim I wherein each digital data processor maintains a data field indicating current priority of the method which it is executing and a run queue which contains a list of runnable methods, and wherein the scheduler assigns runnable methods to the run queue on a priority basis.

7. A method of operating a multiprocessor digital computer system, the method comprising:
storing a data flow program as a set of data structures in a shared memory accessable concurrently by processors of the multiprocessor system, the data structures defining a plurality of objects interconnected through entry terminals for receiving input data and result terminals for receiving data, each object having at least one method for manipulating data associated with its terminals, each method having an assigned priority and an assigned processor;
storing for each processor, a scheduler for scheduling execution of methods assigned to that processor as a function of the assigned priority of that method; and
executing the data flow program with the processors using the scheduler to schedule execution of the methods.

8. The method of claim 7 and further comprising:
creating objects by defining their terminals and contents; and
defining connections between terminals of the objects;
converting the objects created and the connections defined to the data structures stored in the shared memory.

9. The method of claim 7 wherein each processor executes methods assigned to it in order of their assigned priorities, with higher priority methods interrupting execution of lower priority methods.

l0. The method of claim 7 wherein each method has an idle state when it is not scheduled by the - scheduler and is not busy, a runnable state when it is scheduled but not busy, an executing state when it is not scheduled but busy, and a runnable and executing state when it is both scheduled and busy; and wherein a method becomes runnable whenever input data has arrived at all entry terminals with which the method is associated.

HOST
COMPUTER

MULTIPROCESSOR
UNIT

DISPLAY

KEYBOARD

TRANSDUCERS

Fig.1

APPLICATION

INTERPRETER
OBJECT MANAGER

COMM

MGR

COMM

MGR

KERNEL

HOST 12

MPU 18

Fig 2

0 230 721

Fig.3

# Fig.4A

| TYPE: ksys | CONTEXT: calcvar    fmtsdem    system |

ksys

enable

kdesired

kfg

kctlr

add    +    delta_p

delta_k

partial    gate    pcalc

realbool

0 230 721

$$\mathcal{Fig.4B}$$

## Fig.5A

TYPE: example CONTEXT: system

example

clock

fg

pidctlr

plant

scope

# $\mathcal{Fig.}5B$

TYPE: pidctlr    CONTEXT: example system

pidctlr

kp
ki
kd
tsamp
maxctl
neg

cmnd
sum junct
fdbk

pgain
integ
dariv

addl $\Sigma$
add2 $\Sigma$

sat

out

error

0 230 721

# Fig.5C

| TYPE: integrat CONTEXT: pidctlr example system |

integ

tc

tsamp

inp

gain1

gain2

sum Σ

out

0 230 721

# Fig.5D

TYPE: deriv CONTEXT: pidctlr example system

deriv

tc

tsamp

recip
¹/ₓ

inp

gain1

gain2

diff

out

delay
z⁻¹

0 230 721

# Fig.5E

TYPE: plant    CONTEXT: example   system

Fig.6

0 230 721